(19)

Europäisches
Patentamt
European
Patent Office
Office européen
des brevets

(11) **EP 1 906 578 A2**

(12) **EUROPEAN PATENT APPLICATION**

(43) Date of publication:
**02.04.2008 Bulletin 2008/14**

(51) Int Cl.:
***H04L 1/00*** (2006.01)

(21) Application number: **07117255.5**

(22) Date of filing: **26.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **29.09.2006 KR 20060096276**

(71) Applicant: **ELECTRONICS AND
TELECOMMUNICATIONS RESEARCH
INSTITUTE
Taejon 305-350 (KR)**

(72) Inventors:
• **Shin, Min-Su
Yuseong-gu, 305-330, Daejon (KR)**

• **Chang, Dae-Ig
302-280, Daejon (KR)**
• **Oh, Deock-Gil
302-120, Daejon (KR)**
• **Lee, Ho-Jin
305-761, Daejon (KR)**
• **Kim, Young-Han
137-060, Seoul (KR)**
• **Lee, Young-Suk
156-030, Seoul (KR)**

(74) Representative: **Betten & Resch
Patentanwälte
Theatinerstrasse 8
80333 München (DE)**

(54) **Hierarchical channel adaptive packet scheduling apparatus and method for satellite networks**

(57)    Provided are a hierarchical channel adaptive packet scheduling apparatus and method for satellite networks. The apparatus includes: at least one hierarchical queue according to class where a packet to be transmit with each service class of different service levels is queued; at least one queue according to region where a packet to be transmit to each region having different weather conditions is queued; and a queue controller for transmitting a packet queued to the queue according to class and the queue according to region to a receiving device according to a packet scheduling policy fixed in advance.

FIG. 2

EP 1 906 578 A2

Description

## CROSS-REFERENCE S TO RELATED APPLICATIONS

The present invention claims priority of Korean Patent Application No. 10-2006-0096276, filed on September 29, 2006, which is incorporated herein by reference.

## BACKGROUND OF THE INVENTION

### Field of the Invention

The present invention relates to scheduling a packet to be transmitted from a transmitting device having an Adaptive Coding Modulation (ACM) function, which is called an ACM router, to a receiving device in a satellite network; and, more particularly, to a hierarchical channel adaptive packet scheduling apparatus and method which equally maintains the capacity of packets although weather conditions in the regions of respective receiving devices are different, and simultaneously support service classes of diverse levels such as an expedited forwarding (EF) service, a best-effort service (BE) service and an assured forwarding (AF) service.

This work was partly supported by the Information Technology (IT) research and development program of the Korean Ministry of Information and Communication (MIC) and/or the Korean Institute for Information Technology Advancement (IITA) [2006-S020-01, "Development of Satellite and Terrestrial Convergence Technology for Internet Service on High-speed Mobile Vehicles"].

### Description of Related Art

A greater transmission capacity than a conventional method such as Digital Video Broadcasting-Satellite (DVB-S) and DVB-Digital Satellite News Gathering (DVB-DSNG) is required in a channel bandwidth and signal power in order to provide a new service such as high-volume multimedia communication service including high definition television (HDTV), a convergence service of communication and broadcasting, a broadband communication service, and a broadband broadcasting service.

Digital Video Broadcasting System 2 (DVB-S2) is suggested to solve the above problem. DVB-S2 suggests an Adaptive Coding Modulation (ACM) transmission method for maximum transmission efficiency.

According to the ACM transmission method, a packet is transmitted by selecting an optimized channel coding technique and modulation technique according to the state of the satellite communication channel.

For example, when a transmitting device transmits a packet to a receiving device through a satellite in the DVB-S2, the transmitting device receives channel state information from each receiving device through a return channel, e.g., a repeater set up on the ground, senses a weather condition in the region of the receiving device based on the channel state information, modulates the weather condition according to a corresponding modulation technique and transmits the packet. Therefore, the DVB-S2 can acquire a desired transmission quality when the packet is transmitted to the receiving device in a rainy day.

Meanwhile, European Patent Publication No. EP1408637, entitled "An adaptive coding and modulation system for the transmission of DVB/MPEG signals" discloses an ACM transmission method for providing the same service quality to all receiving devices having different channel environments in the DVB-S2.

In the DVB-S2 system including the cited reference (see Fig. 6 at page 10), when a transmitting device transmits packets to the receiving device, packet scheduling is required to queue the packets in the transmitting device and sequentially transmit the packets.

As shown in the prior art, a packet scheduling method applied to the transmitting device of a conventional DVB-S2 system adopts a simple Round-Robin method.

The prior art may be able to provide an optimal packet transmission quality in the DVB-S2 with its coding/modulation technique. However, since simple packet scheduling is applied to receiving devices of different weather conditions, and receiving devices desiring a service class of a different level, there are problems that a transmission rate is changed according to a change in a channel state and effective transmission rate cannot be controlled. Also, it is difficult to provide equality between packet flows.

Therefore, in DVB-S2 based satellite networks, optimized packet scheduling is essentially required according to region having different weather conditions and different service classes in the transmitting device with an ACM function.

## SUMMARY OF THE INVENTION

An embodiment of the present invention is directed to providing a hierarchical channel adaptive packet scheduling apparatus and method for satellite networks which can equally maintain the capacity of packets although weather conditions in the regions of receiving devices are different, and simultaneously support service classes of diverse levels such as an expedited forwarding (EF) service, a best-effort service (BE) service and an assured forwarding (AF) service in scheduling of a packet to be transmitted from a transmitting device having an Adaptive Coding Modulation (ACM) function, which is called an ACM router, to a receiving device in a satellite network.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an aspect of the present invention, there is provided a hierarchical channel-adaptive packet scheduling apparatus of a transmitting device having an Adaptive Coding Modulation (ACM) function in a satellite network, including: at least one hierarchical queue according to class where packets to be transmitted with each service class of different service levels is queued; at least one queue according to region where packets to be transmitted to each region having different weather conditions are queued; and a queue controller for transmitting packets queued to the queues according to class and the queues according to region to a receiving device according to a predetermined packet scheduling policy.

In accordance with another aspect of the present invention, there is a hierarchical channel-adaptive packet scheduling method in a packet scheduling apparatus hierarchically having at least one hierarchical queue according to class and at least one queue according to region in a satellite network, including the steps of: a) checking whether a queue is empty when a packet is transmitted from a specific terminal; b) when the queue is empty, calculating a service start time by activating the queue and storing a packet by selecting a queue according to region corresponding to a destination of a packet; c) in a state that the packet is stored in the queue, selecting a queue according to class corresponding to a child node through service competition between brother nodes up to a parent node at the highest level with respect to the queue; and d) transmitting the packet stored in the selected queue to a receiving device through a satellite channel.

## BRIEF DESCRIPTION OF THE DRAWINGS

Fig. 1 shows a satellite network to which the present invention is applied.

Fig. 2 shows a hierarchical channel adaptive packet scheduling apparatus in accordance with an embodiment of the present invention.

Fig. 3 is a flowchart describing a hierarchical channel adaptive packet scheduling in accordance with an embodiment of the present invention.

## DESCRIPTION OF SPECIFIC EMBODIMENTS

The advantages, features and aspects of the present invention will become apparent from the following description of the embodiments with reference to the accompanying drawings. Therefore, those skilled in the field of this art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

The present invention suggests a packet scheduling technique to be applied to a transmitting device having an Adaptive Coding Modulation (ACM) function in a satellite communication network based on Digital Video Broadcasting System 2 (DVB-S2).

For example, as the DVB-S2 changes a modulation method according to weather conditions, the present invention provides equality among users in receiving parts of different weather conditions, and simultaneously supports service classes of diverse levels such as an expedited forwarding (EF) service, a best-effort service (BE) service and an assured forwarding (AF) service.

Accordingly, the present invention suggests a queue management technique for providing equality according to user locations, which is called a region-based queue management technique, and a queue management technique according to graduated classification. The packet scheduling technique of the present invention is defined as a Hierarchical-Weather Adaptive Fair Queuing (H-WAFQ) packet scheduling technique.

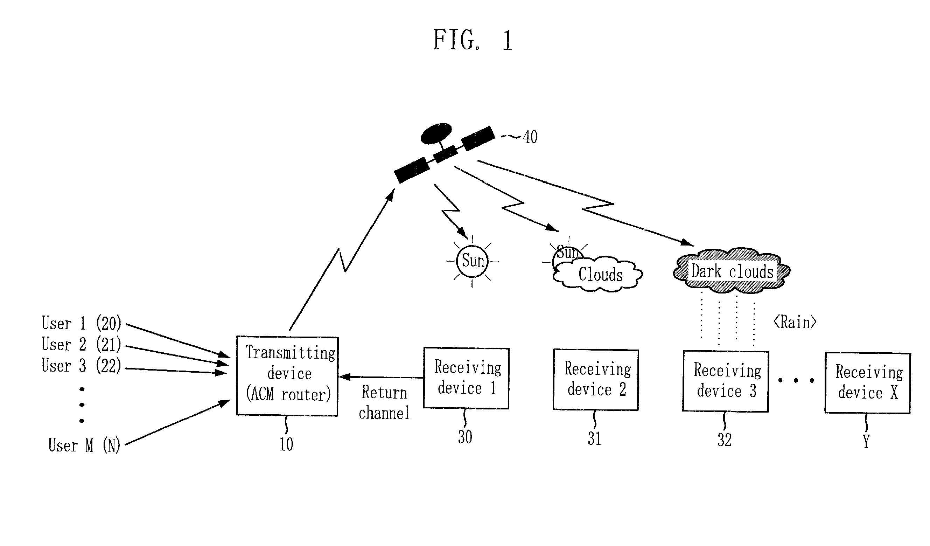

The packet scheduling technique suggested in the present invention will be described in detail with reference to Figs. 1 to 3.

Fig. 1 shows a satellite network to which the present invention is applied.

Referring to Fig. 1, the DVB-S2 based satellite network to which the present invention is applied includes a transmitting device 10 with an ACM function, which is called an ACM router, a plurality of users 20, 21, ..., N for transmitting packets to a receiving device through a satellite 40 by accessing to the transmitting device 10 through a terminal, a plurality of receiving devices 30, 31, ..., X receiving a packet from a satellite 40 through a satellite communication channel.

When each of the receiving devices 30, 31, ..., Y transmits/receives a packet with the transmitting device 10 through the satellite 40, each of the receiving devices 30, 31, ..., Y transmits state information on a satellite communication channel for receiving a packet, which is called channel state information hereinafter, through a return channel, e.g., a satellite communication return channel or a repeater set up on a ground, to the transmitting device 10. The transmitting device 10 senses a weather condition of a region, in which each receiving device is located, such as "clean", "cloudy", and "rainy".

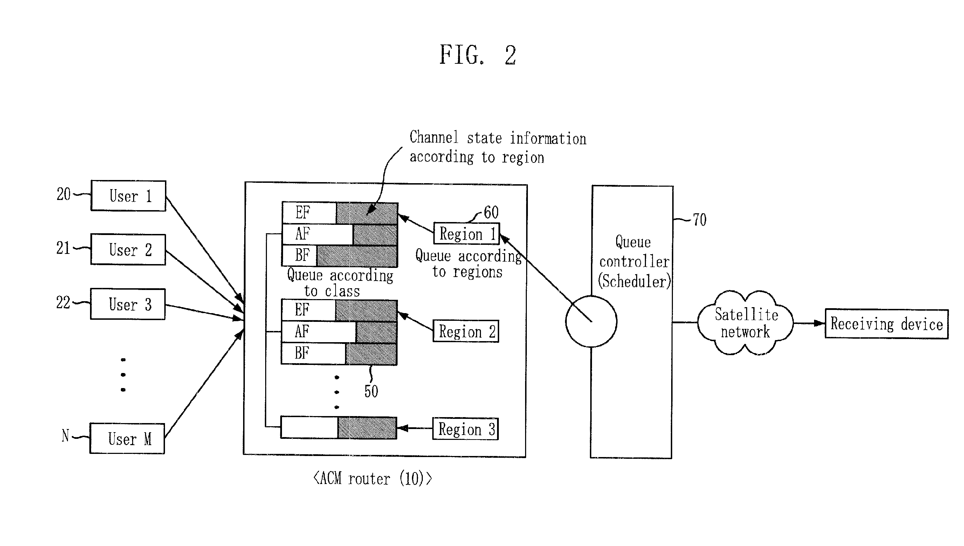

A hierarchical channel adaptive packet scheduling apparatus of the transmitting device 10 as shown in Fig. 1 of the present invention will be described in detail with reference to Fig. 2.

Fig. 2 shows the hierarchical channel adaptive packet scheduling apparatus in accordance with an embodiment of the present invention.

Referring to Fig. 2, the hierarchical channel adaptive packet scheduling apparatus according to the present invention includes queues 50 according to hierarchical classes, which will be referred to as class queues, queues 60 according to regions, which will be referred to as region queues, and a scheduling apparatus 70. The class queues 50 queues a packet to be transmitted with each service class of levels such as an expedited forwarding (EF) service, an assured forwarding service(AF service) and a best-effort service (BE) service. The region queues 60 perform queuing on a packet to be transmitted to each region having different weather conditions. The queue controller 70, i.e., a scheduling apparatus, transmits a packet on which queuing is performed in the class queues 50 and the region queues 60 based on the packet scheduling policy.

The class queues 50 are formed of hierarchical queues. A first queue stores a packet requiring the EF service, i.e., a packet with a priority, which is sensitive to packet delay. A second queue stores a packet requiring the AF service, i.e., a packet with a priority in transmission. A third queue stores a packet requiring the BE service, i.e., a packet with a general transmission order. The class queues 50 store channel state information according to region expressing a weather condition of a region corresponding to a packet destination.

Also, the class queues 50 include hierarchical queues as many as the region queues 60 for storing a packet to be transmitted to the region.

The region queues 60 are formed of a plurality of queues corresponding to each region, which is a region 1, a region 2, and a region 3. The regions have different weather conditions. The channel coding and modulation are performed on the packet stored in a corresponding region queue by an ACM technique according to a weather condition of each region and transmitted to a receiving device located in the corresponding region.

A packet process operation in the transmitting device 10 having the hierarchical channel adaptive packet scheduling apparatus of the present invention will be described. In a state that a packet transmitted from a user is stored in a queue corresponding to the service class on the class queues 50 corresponding to the destination region, the queue controller 70 selects any one region queue among the queues 60 according to region to transmit a packet, selects any one queue on the class queues 50, which are connected to the region queue, and controls such that the flow of the packet stored in the selected queue is transmitted to the receiving device.

The packet process operation of the hierarchical channel adaptive packet scheduling will be described in detail.

When a packet is transmitted from the users 20, 21, ..., N, the packet is stored in the class queues 50 corresponding to a region to be transmitted to and a service class based on destination information of the packet.

In a state that the packet is stored in each queue on the class queues 50 corresponding to the region queues 60, the queue selection method according to region of the present invention for transmitting a packet is operated according to channel state information, i.e., whether weather is fine or poor. When a weather condition is fine, the region queue 60 for transmitting the packet is selected as shown in Equation 1.

$$S(i, l, t) = \begin{cases} CS, & \text{if } i \not\in B(t) \\ F(i, l-1, t), & \text{if } i \in B(t) \end{cases}$$

$$\text{Eq. 1}$$

The CS denotes a start time of the packet which receives a service at present, i.e., where the packet is transmitted at present. The B(t) denotes a set of packet flow backlogged to the time t. Herein, the backlog means a waiting state that the packet is not completely transmitted in the queue.

In Equation 1, when a packet on flow in the packet transmission waiting state arrives at the user, a service start time of the packet is a virtual time when the packet arrives at, i.e., "CS".

When the current packet flow is backlogged, a service start time of a newly arrived packet becomes a service end time of a former packet. For example, when a first packet of a packet flow i arrives at a time t, a service start time "S(i, 1, t)" of the packet is calculated as "F(i, 1-1, t)" as shown in Equation 1.

When the weather condition is poor, in the queue selecting method according to region of the present invention, the region queues 60 for transmitting the packet are selected as shown in Equations 2 and 3.

Equation 2 shows a case of selecting a region queue 60 where a service is provided to the packet flow when the channel error state is not sensed based on the channel state information returning from the receiving device. Equation 3 shows a case of selecting the region queue 60 where a service is provided to the packet flow when the channel error state is sensed based on the channel state information returned from the receiving device.

$$S(i, l, t) = \begin{cases} CS\left(1 - \dfrac{S_b(k) - S_b(i)}{S_b(k)}\right) & , \text{if } i \notin B(t) \\[3mm] F(i, l-1, t)\left(1 - \dfrac{S_b(k) - S_b(i)}{S_b(k)}\right) & , \text{if } i \in B(t) \end{cases}$$

$$\text{Eq. } 2$$

$$S(i, l, t) = \begin{cases} CS\left(1 - \dfrac{S_b(k) - S_b(i)}{S_b(k)}\right)^{-1} & , \text{if } i \notin B(t) \\[3mm] F(i, l-1, t)\left(1 - \dfrac{S_b(k) - S_b(i)}{S_b(k)}\right)^{-1} & , \text{if } i \in B(t) \end{cases}$$

$$\text{Eq. } 3$$

In Equations 2 and 3, "$S_b(i)$" denotes the number of transmission bits according to a modulation technique applied to an activated packet flow i and "$S_b(k)$" denotes the largest number of the transmission bits among the modulation techniques applied to the DVB-S2. For example, when the modulation technique of 32-APSK is applied to the transmitting device 10, "$S_b(k) = 5$".

When the region queues 60 to be provided are selected according to the weather condition of each region, the queues 50 according to class is selected by using Dynamic Start-time Fair Queueing (D-STFQ) in the present invention.

In the selection of a queue according to class, which is suggested in the present invention, the queues 50 according to class to be provided is selected according to the weather condition of the region corresponding to the region queues 60, which are connected to the queues 50 according to class, as shown in Equations 1 and 4.

For example, when the weather condition is fine, a channel state information sense result reveals that the queues 50 according to class to provide a service are selected as shown in Equation 1. When the weather condition is poor as a channel state information sense result, the queues 50 according to class to be provided are selected as shown in Equation 4.

$$S(i, l, t) = \begin{cases} CS\left(1 - \dfrac{S_b(k) - S_b(i)}{S_b(k)}\right) & , \text{if } i \notin B(t) \\[3mm] F(i, l-1, t)\left(1 - \dfrac{S_b(k) - S_b(i)}{S_b(k)}\right) & , \text{if } i \in B(t) \end{cases}$$

$$\text{Eq. } 4$$

In particular, when the class queues 50 are selected as Equation 4 in the present invention, Equation 4 is limitedly used only in a packet of an EF service level, which requires the EF service stored in the first queue on the queues according to class. An EF class quality of service (QoS) may be secured with respect to a change of the transmission rate according to the change of the weather condition in the DVB-S2.

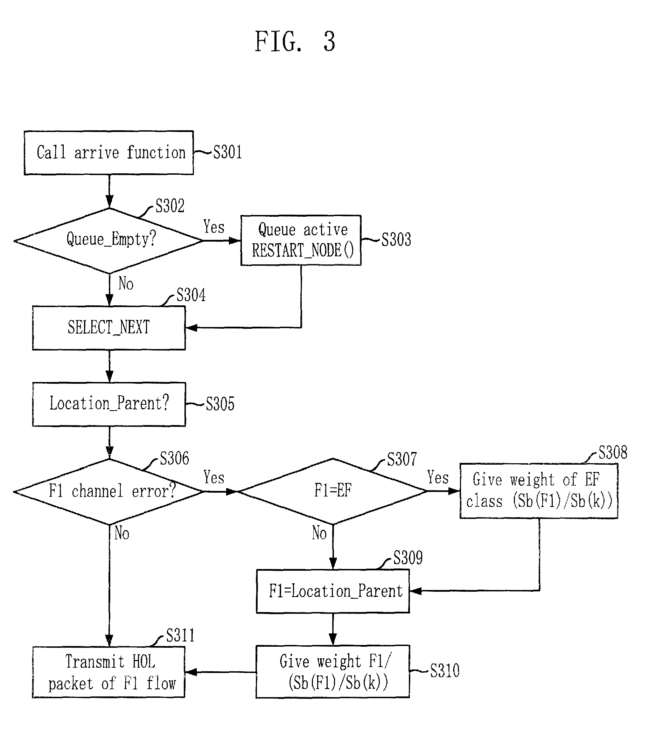

Fig. 3 is a flowchart describing a hierarchical channel adaptive packet scheduling in accordance with an embodiment of the present invention. The packet scheduling process is performed in the transmitting device having the ACM function, i.e., the ACM router.

When a packet is transmitted from a terminal of the user, a packet scheduling process starts by calling on "ARRIVE function" at step S301, and it is checked at step S302 whether the queue is empty.

When it turns out at the step S302 that the queue is empty, i.e., that there is no data in the queue, the queue is activated by calling "RESTART_NODE function", and a service start time is calculated. A queue according to region corresponding to the packet destination is newly selected for a packet of a new user and an input packet is stored at step S303.

At steps S304 and S305, a queue corresponding to a node is selected up to the parent node of the highest level through service competition between brother nodes. When a queue according to region is selected through a queue selecting method according to region, a queue according to class corresponding to a child node is selected.

When a satellite channel F1 is in a bad state in selecting a queue according to class at step S306, the queue according to class is selected based on a D-STFQ technique to secure packet transmission of the EF class service level at steps S307, S308, S309, and S310.

That is, when a queue according to class to be allocated with a service authority is determined based on an STFQ technique with respect to all the queues according to class, the queues according to all classes have different weight. Accordingly, the queue according to class to be allocated with the service authority is determined based on the weight.

In particular, when the selected queue according to class corresponds to the queue according to region where a satellite channel error occurs, the weight of the child nodes is changed thereby to allow more service chances. When the EF class service level of the selected queue according to class needs to be secured, the weight for the EF class is changed to maintain a specific transmission rate. Subsequently, the information on the current parent node receiving the service is stored, and the packet of the queue according to class is transmitted.

The packet stored in the selected queue, i.e., an HOL packet of the F1 flow, is transmitted to the receiving device through the satellite channel at step S311. When the selected queue according to class does not have a channel error, a packet stored in the queue is transmitted without any change of the weight.

The present invention described above provides equality among users according to the modulation technique, which is flexibly changed in a satellite network based on DVB-S2. Also, the present invention simultaneously supports diverse service classes such as an expedited forwarding (EF) service, a best-effort service (BE) service and an assured forwarding (AF) service.

As described above, the technology of the present invention can be realized as a program and stored in a computer-readable recording medium, such as CD-ROM, RAM, ROM, floppy disk, hard disk and magneto-optical disk. Since the process can be easily implemented by those skilled in the art of the present invention, further description will not be provided herein.

While the present invention has been described with respect to the specific embodiments, it will be apparent to those skilled in the art that various changes and modifications may be made without departing from the spirit and scope of the invention as defined in the following claims.

**Claims**

1. A hierarchical channel-adaptive packet scheduling apparatus of a transmitting device having an Adaptive Coding Modulation (ACM) function in a satellite network, comprising:

   at least one hierarchical queue according to class where a packet to be transmitted with each service class of different service levels is queued;
   at least one queue according to region where packets to be transmitted to each region having different weather conditions are queued; and
   a queue controller for transmitting packets queued to the queues according to class and the queues according to region to a receiving device according to a predetermined packet scheduling policy.

2. The apparatus of claim 1, wherein each of packets requiring an expedited forwarding (EF) service, a packet requiring an assured forwarding (AF) service and a packet requiring a best-effort service (BE) service is queued to each queue of the queues according to class.

3. The apparatus of claim 1 or 2, wherein a packet of a corresponding service level and channel state information according to region showing a weather condition of a region corresponding to a packet destination are queued to each queue of the queue according to class.

4. The apparatus of one of claims 1 to 3, wherein the queues according to class include hierarchical queues as many as queues according to region corresponding to each region.

5. The apparatus of one of claims 1 to 4, wherein channel coding and modulation are performed on packets queued to the region queues by the ACM function according to the weather condition of the region, and the packets are transmitted to the receiving device located in the region.

6. The apparatus of any one of claims 1 to 5, wherein in selecting of the queue according to region in the queue controller, when the weather condition of the region corresponding to the packet destination is fine, a queue according to region for transmitting the packet is selected based on Equation 1, expressed as

$$S(i, l, t) = \begin{cases} CS, & \text{if } i \notin B(t) \\ F(i, l-1, t), & \text{if } i \in B(t) \end{cases}$$

$$\text{Eq. 1}$$

where "CS" denotes a start time of a received packet and "B(t)" denotes a set of packet flows backlogged to a time t.

7. The apparatus of any one of claims 1 to 6, wherein in selecting of the queue according to region in the queue controller, when a channel error state is not sensed in a state that the weather condition of the region corresponding to the packet destination is poor, a queue according to region for transmitting the packet is selected based on Equation 2, expressed as

$$S(i, l, t) = \begin{cases} CS\left(1 - \dfrac{S_b(k) - S_b(i)}{S_b(k)}\right) & \text{, if } i \notin B(t) \\ F(i, l-1, t)\left(1 - \dfrac{S_b(k) - S_b(i)}{S_b(k)}\right) & \text{, if } i \in B(t) \end{cases}$$

$$\text{Eq. 2}$$

where, "CS" is a start time of a received packet; "B(t)" denotes a set of packet flows backlogged to a time t; "$S_b(i)$" denotes the number of transmission bits according to a modulation technique applied to an activated packet flow i; and "$S_b(k)$" denotes the largest number of the transmission bits among the modulation techniques.

8. The apparatus of any one of claims 1 to 7, wherein in selecting of the queue according to region in the queue controller, when a channel error state is sensed in a state that the weather condition of the region corresponding to the packet destination is poor, a queue according to region for transmitting the packet is selected based on Equation 3, expressed as

$$S(i, l, t) = \begin{cases} CS\left(1 - \dfrac{S_b(k) - S_b(i)}{S_b(k)}\right)^{-1} & \text{, if } i \notin B(t) \\ F(i, l-1, t)\left(1 - \dfrac{S_b(k) - S_b(i)}{S_b(k)}\right)^{-1} & \text{, if } i \in B(t) \end{cases}$$

$$\text{Eq. 3}$$

where, "CS" is a start time of a received packet; "B(t)" denotes a set of packet flows backlogged to a time t; "$S_b(i)$" denotes the number of transmission bits according to a modulation technique applied to an activated packet flow i; and "$S_b(k)$" denotes the largest number of the transmission bits among the modulation techniques.

9. The apparatus of any one of claims 1 to 8, wherein in selecting of the queue according to region and the queue according to class corresponding to the queue according to region in the queue controller, the queue according to class to be provided is selected based on Dynamic Start-time Fair Queueing (D-STFQ).

10. The apparatus of one of claims 1 to 9, wherein in selection of the queue according to region in the queue controller, when the weather condition of the region corresponding to the queue according to region is poor, a queue according to class for transmitting the packet is selected based on Equation 4, expressed as

$$S(i, l, t) = \begin{cases} CS\,(1 - \dfrac{S_b(k) - S_b(i)}{S_b(k)}) & , \text{if } i \notin B(t) \\ F(i, l-1, t)(1 - \dfrac{S_b(k) - S_b(i)}{S_b(k)}) & , \text{if } i \in B(t) \end{cases}$$

$$\text{Eq. 4}$$

where, "CS" is a start time of a received packet; "B(t)" denotes a set of packet flows backlogged to a time t; "$S_b(i)$" denotes the number of transmission bits according to a modulation technique applied to an activated packet flow i; and "$S_b(k)$" denotes the largest number of the transmission bits among the modulation techniques.

11. The apparatus of claim 10, wherein in selection of the queue according to class in the queue controller, the Equation 4 is applied only to a packet requiring an expedited forwarding (EF) service level stored in the queue according to class.

12. A hierarchical channel-adaptive packet scheduling method in a packet scheduling apparatus hierarchically having at least one hierarchical queue according to class and at least one queue according to region in a satellite network, comprising the steps of:

a) checking whether a queue is empty when a packet is transmitted from a specific terminal;
b) when the queue is empty, calculating a service start time by activating the queue and storing a packet by selecting a queue according to region corresponding to a destination of the packet;
c) in a state that the packet is stored in the queue, selecting a queue according to class corresponding to a child node through service competition between brother nodes up to a parent node at the highest level with respect to the queue; and
d) transmitting the packet stored in the selected queue to a receiving device through a satellite channel.

13. The method of claim 12, wherein in the class queue selecting step c), when the satellite channel state is in a bad state, a queue according to class, which is a class queue, is selected based on Dynamic Start-time Fair Queueing (D-STFQ) to secure packet transmission requiring a level of an expedited forwarding (EF) service level.

14. The method of claim 12 or 13, wherein in the class queue selecting step c), a queue according to class to be allocated with a service authority by using the STFQ is determined based on a weight, which is differently given to each class queue.

15. The method of one of claims 12 to 14, wherein in the process for determining the queue class to be allocated with the service authority, when the class queue corresponds to the region queue where a satellite channel error occurs, a weight on an EF class is changed in order to limit a packet transmission rate requiring the EF service level.

# FIG. 1

FIG. 2

Channel state information
according to region

20 — User 1

21 — User 2

22 — User 3

N — User M

EF
AF
BF
Queue according
to class

Region 1 — 60
Queue according
to regions

EF
AF
BF

Region 2

50

Region 3

Queue
controller
(Scheduler) — 70

Satellite
network

Receiving device

〈ACM router (10)〉

EP 1 906 578 A2

# FIG. 3

Call arrive function ——S301

↓

S302
Queue_Empty? ——Yes——→ Queue active RESTART_NODE() ——S303

↓ No

S304
SELECT_NEXT ←——

↓

Location_Parent? ——S305

↓

S306
F1 channel error? ——Yes——→ S307 F1=EF ——Yes——→ S308 Give weight of EF class (Sb(F1)/Sb(k))

↓ No ↓ No

S309
F1=Location_Parent ←——

↓

S311
Transmit HOL packet of F1 flow ←—— Give weight F1/(Sb(F1)/Sb(k)) ——S310

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060096276

- EP 1408637 A

**Non-patent literature cited in the description**

- Development of Satellite and Terrestrial Convergence Technology for Internet Service on High-speed Mobile Vehicles. *Korean Institute for Information Technology Advancement (IITA,* 2006, 020-01